# EUROPÄISCHE PATENTSCHRIFT

(11) **EP 4 445 714 B1**
(45) Veröffentlichungstag und Bekanntmachung des Hinweises auf die Patenterteilung: **15.10.2025**
(21) Anmeldenummer: 24157264.3
(22) Anmeldetag: 13.02.2024
(51) Int. Cl.: A01D 41/12

(54) **ERNTEGUTAUFNAHMEBEHÄLTNIS FÜR EINE ERNTEMASCHINE**
CROP COLLECTING CONTAINER FOR A HARVESTER
RÉCIPIENT DE RÉCOLTE POUR UNE RÉCOLTEUSE

(30) Priorität: 13.04.2023 DE 102023109282
(43) Veröffentlichungstag der Anmeldung: 16.10.2024
(73) Patentinhaber: CLAAS Selbstfahrende Erntemaschinen GmbH, 33428 Harsewinkel (DE)
(72) Erfinder: Burbank, Martin, 48231 Warendorf (DE); Röwekamp, Thomas, 49134 Wallenhorst (DE)
(74) Vertreter: CLAAS Gruppe

(56) Entgegenhaltungen:
- CN-A- 106 068 904
- DE-A1- 19 629 001
- GB-A- 2 296 175
- US-B2- 6 692 352

## Beschreibung

Die Erfindung betrifft ein Erntegutaufnahmebehältnis für eine Erntemaschine gemäß dem Oberbegriff des Anspruchs 1.

Eine als Mähdrescher ausgeführte Erntemaschine mit einem Erntegutaufnahmebehältnis ist aus der DE 196 29 001 A1 bekannt. Die DE 196 29 001 A1 offenbart ein Erntegutaufnahmebehältnis mit einem polygonalen Öffnungsquerschnitt. Am oberen Rand des Erntegutaufnahmebehältnisses sind einander gegenüberliegende Erweiterungselemente verschwenkbar angeordnet. Ein Motor ist trieblich mit einem der Erweiterungselemente verbunden, um das Erweiterungselement von einer Transportstellung, in der das Erweiterungselement flach auf dem Erntegutbehältnis aufliegt, hin zu einer Aufnahmestellung, in der das Erweiterungselement zur Vergrößerung des Aufnahmevolumens des Erntegutaufnahmebehältnisses schräg aufsteht, zu verfahren. Die DE 196 29 001 A1 sieht vor, dass das mit dem Motor gekoppelte Erweiterungselemente eine gebogene Stirnkante umfasst, wobei das gegenüberliegendes Erweiterungselement auf der Stirnkante aufliegt, sodass eine Verschwenkbewegung des mit dem Motor gekoppelten Erweiterungselements auf das gegenüberliegende Erweiterungselement mittels der bogenförmigen Stirnkante übertragen wird.

Dadurch, dass die Stirnkante des Erweiterungselements bogenförmig verlängert ist, ergibt sich ein flächiger Abschnitt. Beim Verfahren eines derartigen flächigen Abschnitts von der Aufnahmestellung hin zu der Transportstellung wird das innerhalb des Erntegutbehältnis befindliche Erntegut durch die flächige Stirnkante abschnittsweise verdrängt, wobei die Stirnkante beschädigt bzw. verbogen werden kann. Ferner ist das Aufliegen eines Erweiterungselements auf der bogenförmigen Stirnkante dahingehen nachteilig, dass die Erweiterungselemente bei einem Betrieb der Erntemaschine auf unebenen Untergrund in Schwingung geraten und Stöße zwischen dem Erweiterungselement und der bogenförmigen Stirnkante übertragen werden.

Es ist deshalb Aufgabe der Erfindung, die beschriebenen Nachteile des Standes der Technik zu vermeiden und insbesondere ein Erntegutaufnahmebehältnis mit einer verbesserten Zugänglichkeit zu schaffen.

Diese Aufgabe wird erfindungsgemäß durch die kennzeichnenden Merkmale des Anspruchs 1 gelöst.

Gemäß dem Anspruch 1 wird ein Erntegutaufnahmebehältnis für eine Erntemaschine, umfassend einen nach oben offenen Sammelbehälter mit einem im Wesentlichen polygonalen Öffnungsquerschnitt sowie ein erstes und zweites Erweiterungselement vorgeschlagen, die einander gegenüberliegend angeordnet sind, wobei die Erweiterungselemente jeweils um eine im Wesentlichen horizontal verlaufende Schwenkachse am Rand einer Öffnung des Sammelbehälters schwenkbeweglich angelenkt sind, wobei die Erweiterungselemente von einer geschlossenen Transportstellung in eine geöffnete Aufnahmestellung überführbar sind, wobei an dem ersten Erweiterungselement zumindest zwei Gleitbügel ortsfest angeordnet sind, wobei die Gleitbügel jeweils in einer an dem zweiten Erweiterungselement angeordneten Halterung geführt sind.

Die Erfindung hat den Vorteil, dass ein Hebemechanismus zum Überführen der Erweiterungselemente von der Transportstellung zu der Aufnahmestellung und umgekehrt lediglich mit einem der Erweiterungselemente gekoppelt sein muss, da eine Verschwenkbewegung mittels der Gleitbügel zwischen dem ersten und zweiten Erweiterungselement übertragen wird. Hierdurch gestaltet sich der Hebemechanismus besonders kostengünstig. Weiterhin werden die Gleitbügel in den Halterungen gehaltert, sodass die Erweiterungselemente nicht relativ zueinander Schwingen können.

Gemäß einer vorteilhaften Ausgestaltung können die Gleitbügel an einer der Schwenkachse des ersten Erweiterungselements gegenüberliegenden Stirnseite an dem ersten Erweiterungselement angeordnet sein. Gemäß einer weiteren vorteilhaften Ausgestaltung sind die Gleitbügel beabstandet zueinander angeordnet.

Besonders vorteilhaft ist es, wenn die Gleitbügel als sich bogenförmig erstreckende Stäbe ausgebildet sind, wobei vorzugsweise die Gleitbügel aus Stahl ausgebildet sind und die Halterungen aus Kunststoff ausgeführte Gleitlager bilden. Eine Ausführung der Gleitbügel als Stäbe ist besonders vorteilhaft, da diese eine geringe Verdrängung aufweisen und somit im Wesentlichen widerstandslos in ein mit Erntegut gefülltes Erntegutaufnahmebehältnis eintauchen können. Mithin sind die Erweiterungselemente auch bei einem mit Erntegut gefüllten Sammelbehälter problemlos von der Aufnahmestellung in die Transportstellung überführbar.

Eine vorteilhafte Weiterbildung sieht vor, dass die Gleitbügel jeweils an ihrem freien Ende einen Spannstift umfassen, der einen Anschlag mit der Halterung in der geöffneten Aufnahmestellung bildet. Hierdurch wird verhindert, dass die Gleitbügel endseitig aus der Halterung herausgleiten und die Erweiterungselemente über ihre bestimmungsgemäßen Endlagen hinaus verschwenkbar sind.

Eine weitere vorteilhafte Weiterbildung sieht vor, dass die Halterung einen Verriegelungsmechanismus umfasst, welcher in einer Verschlussstellung den Gleitbügel in der Halterung sichert und in einer Öffnungsstellung eine Öffnung zum Herausführen der Gleitbügel aus der Halterung freigibt. Diese vorteilhafte Weiterbildung ermöglicht es zumindest eines der Erweiterungselemente über die Aufnahmestellung hinaus hin zu einer Wartungsstellung zu Verschwenken. In der Wartungsstellung ist der Sammelbehälter für eine Person zugänglich.

Vorzugsweise kann die Halterung ein Betätigungsmittel, insbesondere eine Schraube oder Bolzen, zum Überführen des Verriegelungsmechanismus von der Verschlussstellung in die Öffnungsstellung umfassen, wobei das Betätigungsmittel von einer Oberseite des Erweiterungselements betätigbar ist. Hierdurch wird erreicht, dass die Halterung besonders komfortabel in die Öffnungsstellung überführbar ist.

Vorzugsweise umfasst die Erntemaschine einen Hebemechanismus zum Überführen der Erweiterungselemente von der Transportstellung in die geöffnete Aufnahmestellung und umgekehrt, wobei der Hebemechanismus an dem ersten Erweiterungselement angelenkt ist, wobei der Hebemechanismus durch einen manuell bedienbaren Bedienhebel betätigbar ist. Dadurch, dass der Hebemechanismus lediglich an dem ersten Erweiterungselement angelenkt ist und eine manuelle Bedienung erfordert, ergibt sich ein besonders kostengünstiger und einfacher Aufbau.

Vorzugsweise kann an dem Bedienhebel eine Welle angeordnet sein, die eine Drehachse des Bedienhebels ausbildet, wobei der Drehachse des Bedienhebels Anschläge zugeordnet sind, die die Endlagen des Hebemechanismus festlegen. Mittels der Anschläge sind die Erweiterungselemente auf einfache Art und Weise in der Transportstellung und der Aufnahmestellung arretierbar. Hierfür kann vorzugsweise auf der Welle eine Halbkreisscheibe mit Aussparungen angeordnet sein, wobei der Hebemechanismus einen Handhebel umfasst, der mit den Aussparungen eine Rastung zum Definieren der Anschläge ausbildet.

Um eine komfortable Bedienung des Hebemechanismus zu ermöglichen kann der Hebemechanismus eine Gasdruckfeder zur Dämpfung einer Verschwenkbewegung des ersten Erweiterungselements umfassen. Hierfür kann die Gasdruckfeder einendig an der Halbkreisscheibe und anderendig an dem Sammelbehälter angeordnet sein. Die Gasdruckfeder ist derart ausgebildet, sodass diese abschnittsweise eine Drehbewegung der Welle dämpft und abschnittsweise eine die Drehbewegung unterstützende Kraft auf die Welle überträgt.

Besonders bevorzugt ist es, wenn an der Welle ein Hebel angeordnet ist, der sich ausgehend von der Welle in radialer Richtung erstreckt, wobei an dem freien Ende des Hebels eine Koppelstange angeordnet ist, wobei die Koppelstange an ihrem freien Ende an dem ersten Erweiterungselement angeordnet ist. Eine vorteilhafte Ausgestaltung sieht vor, dass sich der Hebel und die Koppelstange in den Endlagen des Hebemechanismus in Längsrichtung parallel zueinander erstrecken. Hierdurch ergibt sich eine besonders gute Kraftübertragung von dem Bedienhebel hin zu dem ersten Erweiterungselement, wobei an den Stellen mit den größten auf den Hebemechanismus wirkenden Momenten ein Benutzer die größte Hebelkraft mittels des Bedienhebels auf das erste Erweiterungselement übertagen kann.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: eine schematische Seitenansicht eines Mähdreschers;
- Figur 2: eine schematische Ansicht eines Erntegutaufnahmebehältnisses eines Mähdreschers in einer Aufnahmestellung;
- Figur 3: eine perspektivische Ansicht eines an einem Erweiterungselement des Erntegutaufnahmebehältnisses angeordneten Gleitbügels;
- Figur 4: ein Hebemechanismus zum Überführen von Erweiterungselementen von einer Transportstellung hin zu einer Aufnahmestellung;
- Figur 5: einen Ausschnitt des Hebemechanismus gemäß Figur 4;
- Figur 6: die Erweiterungselemente eines Erntegutaufnahmebehältnisses in einer Wartungsstellung.

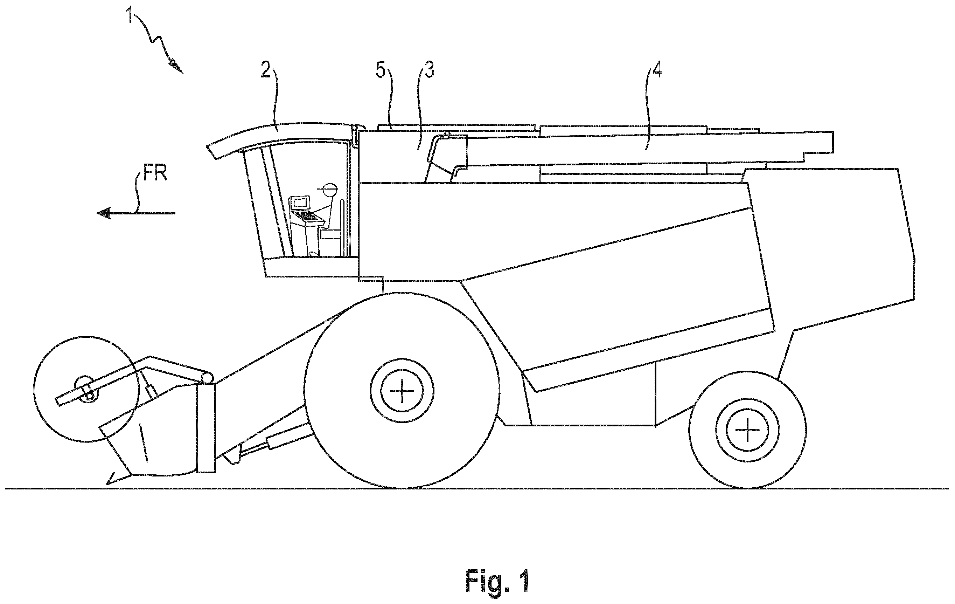

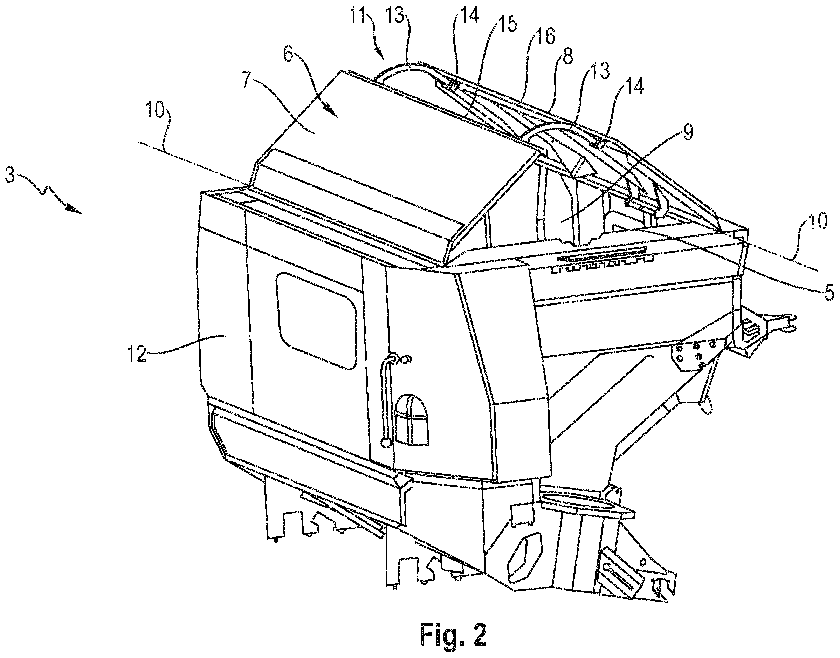

In Fig. 1 ist eine als Mähdrescher ausgebildete Erntemaschine 1 in einer schematischen Seitenansicht dargestellt. Hinter der in Fahrtrichtung FR weisenden Fahrerkabine 2 ist ein Erntegutaufnahmebehältnis 3 angeordnet, das dazu dient, die während des Erntevorgangs ausgedroschenen und gereinigten Körner zwischenzuspeichern um sie anschließend mittels eines Korntankentleerungsrohrs 4 an Ladewagen zu übergeben. Das Erntegutaufnahmebehältnis 3 umfasst einen Sammelbehälter 12 mit einem polygonalen Öffnungsquerschnitt 5. Hier und vorzugsweise ist der Öffnungsquerschnitt 5 rechteckig ausgebildet. Der Sammelbehälter 12 ist von oben mittels eines mehrteiligen Deckels 6 abgedeckt. Der Deckel 6 umfasst zumindest ein erstes und ein zweites Erweiterungselement 7, 8. Die Erweiterungselemente 7, 8 sind jeweils um horizontal verlaufende Schwenkachsen 10 am oberen Rand der Öffnung 9 des Sammelbehälters 12 angeordnet. Die Erweiterungselemente 7, 8 sind von einer in Fig. 2 dargestellten Aufnahmestellung 11 in eine nicht näher dargestellte Transportstellung verschwenkbeweglich. In der Aufnahmestellung 11 erstecken sich die Erweiterungselemente 7, 8 ausgehend von dem oberen Rand des Sammelbehälters 12 schräg nach oben, um das Fassungsvermögen des Erntegutaufnahmebehältnisses 3 zu vergrößern. In der Transportstellung sind die Erweiterungselemente 7, 8 flach ausgerichtet und liegen seitlich am oberen Rand auf, sodass die Öffnung 9 des Sammelbehälters 12 verschlossen ist.

An dem ersten Erweiterungselement 7 sind zwei Gleitbügel 13 ortsfest angeordnet. Die Gleitbügel 13 erstrecken sich ausgehend von einer der Schwenkachse 10 gegenüberliegenden Stirnseite 15 des ersten Erweiterungselements 7 bis unter das zweite Erweiterungselement 8. Die Gleitbügel 13 sind beabstandet zueinander angeordnet. Die Gleitbügel 13 sind als sich bogenförmig erstreckende Stäbe mit einem rechteckigen, vorzugsweise dünnen, Profil ausgebildet. Hier und vorzugsweise sind die die Gleitbügel 13 aus Stahl ausgebildet. Die Gleitbügel 13 sind jeweils in einer Halterung 14 geführt, wobei die jeweilige Halterung 14 an einer der Schwenkachse 10 des zweiten Erweiterungselements 8 gegenüberliegenden Stirnseite 16 an dem zweiten Erweiterungselement 8 angeordnet sind. Die Halterungen 14 bilden jeweils ein U-förmiges Profil, in welchen die Gleitbügel 13 geführt sind. Hierfür sind die Halterungen 14 aus Kunststoff ausgeführt, sodass diese ein Gleitlager für die aus Stahl ausgeführten Gleitbügel 13 sind. Die Halterungen 14 und Gleitbügel 13 sind identisch ausgebildet.

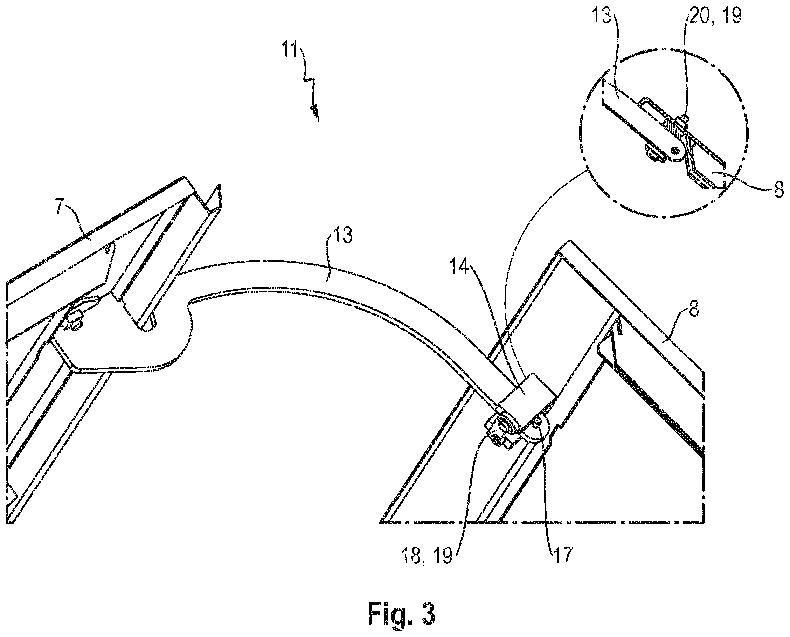

In Fig. 3 ist einer der Gleitbügel 13 mit einer Halterung 14 in einer perspektivischen Ansicht dargestellt. Der Gleitbügel 13 umfasst an dem freien Ende einen Spannstift 17, der einen Anschlag mit der Halterung 14 in der geöffneten Aufnahmestellung 11 bildet. Hierfür liegt der Spannstift 17 in der Aufnahmestellung 11, welche eine äußere Endlage der Erweiterungselemente 7, 8 entspricht, an der Halterung 14 an.

Die Halterung 14 umfasst einen Verriegelungsmechanismus 18, welcher in einer in Fig. 3 dargestellten Verschlussstellung den Gleitbügel 13 in der Halterung 14 sichert und in einer Öffnungsstellung eine Öffnung zum Herausführen des Gleitbügels 13 aus der Halterung 14 freigibt. Hierfür ist ein Riegel 19 verschwenkbeweglich an dem nach unten offenen Ende der U-förmigen Halterung 14 verschwenkbeweglich angeordnet.

Die Halterung 14 umfasst ein als Schraube oder Bolzen ausgeführtes Betätigungsmittel 20, zum Überführen des Verriegelungsmechanismus 18 bzw. des Riegels 19 von der Verschlussstellung in die Öffnungsstellung und umgekehrt. Das Betätigungsmittel 20 ist von einer Oberseite des zweiten Erweiterungselements 8 betätigbar. Hierfür erstreckt sich das Betätigungsmittel 20 durch die an der Unterseite des zweiten Erweiterungselements 8 befindliche Halterung 14 und durch das zweite Erweiterungselement 8 hindurch. Als Unterseite der Erweiterungselemente 7, 8 ist hier die Seite zu verstehen, welche im geschlossenen Zustand bzw. der Transportstellung des Erntegutaufnahmebehältnisses 3 dem Boden des Sammelbehälters 10 zugewandt ist. Als Oberseite ist die in der Transportstellung der Erweiterungselemente 7, 8 nach oben gerichtete Seite zu verstehen.

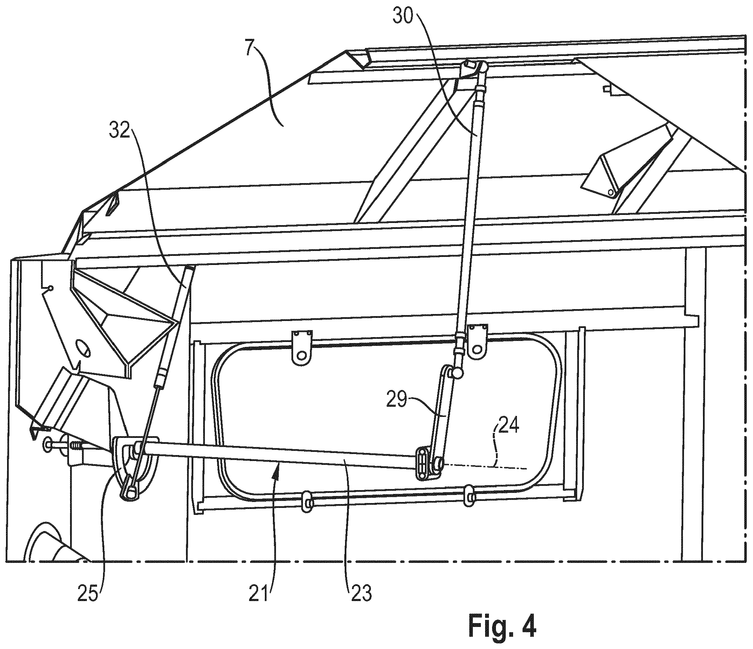

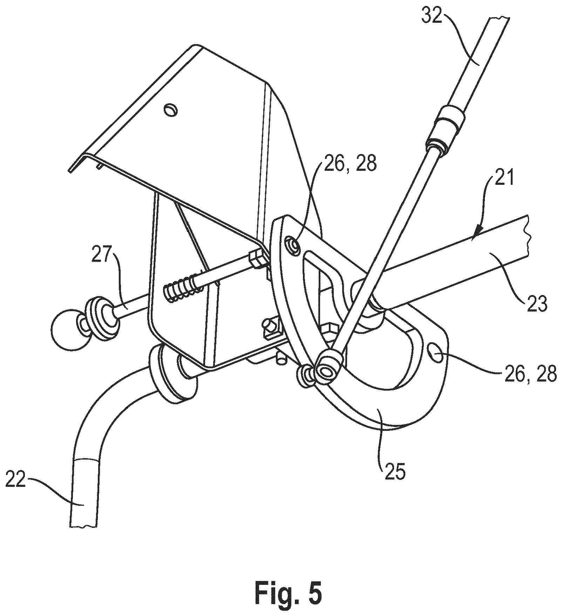

In Fig. 4 ist ein Hebemechanismus 21 zum Überführen der Erweiterungselemente 7, 8 von der Transportstellung in die Aufnahmestellung 11 und umgekehrt in einer perspektivischen Ansicht dargestellt. Der Hebemechanismus 21 ist an dem ersten Erweiterungselement 7 angelenkt und durch einen in Fig. 5 dargestellten manuell bedienbaren Bedienhebel 22 betätigbar. Hierfür ist an dem Bedienhebel 22 eine Welle 23 angeordnet. Hier und vorzugsweise ist die Welle 23 einteilig mit dem Bedienhebel 22 ausgebildet. Die Welle 23 stellt eine Drehachse 24 für den Bedienhebel 22 dar.

Auf der Welle 23 ist eine Halbkreisscheibe 25 mit zwei Aussparungen 26 ortsfest angeordnet. Weiterhin umfasst der Hebemechanismus 21 einen Handhebel 27, der mit den Aussparungen 26 eine Rastung zum Definieren zweier Anschläge 28 ausbildet. Mithin sind der Drehachse 24 des Bedienhebels 22 zwei Anschläge 28 zugeordnet, die die Endlagen, nämlich die Transportstellung und die Aufnahmestellung 11, des Hebemechanismus 21 festlegen. Sowohl der Handhebel 27 als auch der Bedienhebel 22 sind seitlich am Erntegutaufnahmebehältnis 3 zur manuellen Bedienung zugänglich. Weiterhin ist eine Gasdruckfeder 32 einendig an der Halbkreisscheibe 25 und anderendig an dem Sammelbehälter 12 angeordnet, sodass eine Drehbewegung der Welle 23 abschnittsweise gedämpft und abschnittsweise unterstützt wird. Hierdurch wird eine manuelle Bedienung des Hebemechanismus 21 erleichtert.

Hier und vorzugsweise ist zur Übertragung einer Drehbewegung von der Welle 23 auf das erste Erweiterungselement 7 eine Hebel 29 auf der Welle 23 angeordnet. Der Hebel 29 erstreckt sich ausgehend von der Welle 23 in radialer Richtung. An dem freien Ende des Hebels 29 ist eine Koppelstange 30 angeordnet, wobei die Koppelstange 30 an ihrem freien Ende an dem ersten Erweiterungselement 7 angeordnet ist. Mithin wird ein Drehmoment von der Welle 23 auf den Hebel 29 übertragen und mittels der Koppelstange 30 das erste Erweiterungselement 7 um seine Schwenkachse 10 verschwenkt. Zugleich wird eine Schwenkbewegung des ersten Erweiterungselements 7 mittels der Gleitbügel 13 auf das zweite Erweiterungselement 8 übertragen.

Um eine komfortable Bedienung des Hebemechanismus 21 zu erreichen, erstrecken sich der Hebel 29 und die Koppelstange 30 in den Endlagen, bzw. der Aufnahmestellung 11 und der Transportstellung der Erweiterungselemente 7, 8, in Längsrichtung parallel zueinander, sodass sich eine besonders vorteilhafte Kraftübertragung von dem Bedienhebel 22 auf das erste Erweiterungselement 7 ergibt.

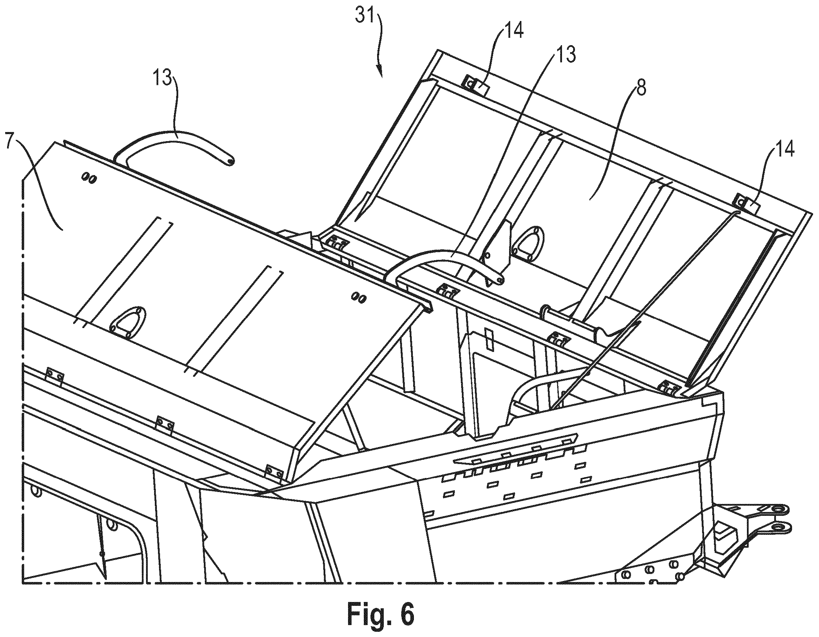

In Fig. 6 ist das Erntegutaufnahmebehältnis 3 in einer Wartungsstellung 31 dargestellt. In dieser Wartungsstellung 31 ist der Verriegelungsmechanismus 18 der Halterungen 14 in eine Öffnungsstellung überführt und die Gleitbügel 18 sind aus den Halterungen 14 herausgeführt, sodass das zweite Erweiterungselement 8 über seine Endlage hinaus verschwenkbeweglich ist. In der Wartungsstellung 31 ist das zweite Erweiterungselement 8 derart verschwenkt, sodass der Sammelbehälter 12 für eine Person zugänglich ist.

### Bezugszeichenliste:

- 1: Erntemaschine
- 2: Fahrerkabine
- 3: Erntegutaufnahmebehältnis
- 4: Korntankentleerungsrohr
- 5: Öffnungsquerschnitt
- 6: Deckel
- 7: Erstes Erweiterungselement
- 8: Zweites Erweiterungselement
- 9: Öffnung
- 10: Schwenkachse
- 11: Aufnahmestellung
- 12: Sammelbehälter
- 13: Gleitbügel
- 14: Halterung
- 15: Stirnseite
- 16: Stirnseite
- 17: Spannstift
- 18: Verriegelungsmechanismus
- 19: Riegel
- 20: Betätigungsmittel
- 21: Hebemechanismus
- 22: Bedienhebel
- 23: Welle
- 24: Drehachse
- 25: Halbkreisscheibe
- 26: Aussparungen
- 27: Handhebel
- 28: Anschlag
- 29: Hebel
- 30: Koppelstange
- 31: Wartungsstellung
- 32: Gasdruckfeder
- FR: Fahrtrichtung

## Patentansprüche

1. Erntegutaufnahmebehältnis (3) für eine Erntemaschine (1), umfassend einen nach oben offenen Sammelbehälter (12) mit einem im Wesentlichen polygonalen Öffnungsquerschnitt (5) sowie ein erstes und zweites Erweiterungselement (7, 8), die einander gegenüberliegend angeordnet sind, wobei die Erweiterungselemente (7, 8) jeweils um eine im Wesentlichen horizontal verlaufende Schwenkachse (10) am Rand einer Öffnung (9) des Sammelbehälters (12) schwenkbeweglich angeordnet sind, wobei die Erweiterungselemente (7, 8) von einer geschlossenen Transportstellung in eine geöffnete Aufnahmestellung (11) überführbar sind,
**dadurch gekennzeichnet, dass**
an dem ersten Erweiterungselement (7) zumindest zwei Gleitbügel (13) ortsfest angeordnet sind, wobei die Gleitbügel (13) jeweils in einer an dem zweiten Erweiterungselement (8) angeordneten Halterung (14) geführt sind.

2. Erntegutaufnahmebehältnis (3) nach Anspruch 1, **dadurch gekennzeichnet, dass** die Gleitbügel (13) an einer der Schwenkachse (10) des ersten Erweiterungselements (7) gegenüberliegenden Stirnseite (16) an dem ersten Erweiterungselement (7) angeordnet sind.

3. Erntegutaufnahmebehältnis (3) nach einem der Ansprüche 1 oder 2, **dadurch gekennzeichnet, dass** die Gleitbügel (13) beabstandet zueinander angeordnet sind.

4. Erntegutaufnahmebehältnis (3) nach einem der Ansprüche 1 bis 3, **dadurch gekennzeichnet, dass** die Gleitbügel (13) als sich bogenförmig erstreckende Stäbe ausgebildet sind, wobei vorzugsweise die Gleitbügel (13) aus Stahl ausgebildet sind und die Halterungen (14) aus Kunststoff ausgeführte Gleitlager bilden.

5. Erntegutaufnahmebehältnis (3) nach einem der Ansprüche 1 bis 4, **dadurch gekennzeichnet, dass** die Gleitbügel (13) jeweils an ihrem freien Ende einen Spannstift (17) umfassen, der einen Anschlag mit der jeweiligen Halterung (14) in der geöffneten Aufnahmestellung (11) bildet.

6. Erntegutaufnahmebehältnis (3) nach einem der Ansprüche 1 bis 6, **dadurch gekennzeichnet, dass** die jeweilige Halterung (14) einen Verriegelungsmechanismus (18) umfasst, welcher in einer Verschlussstellung den jeweiligen Gleitbügel (13) in der jeweiligen Halterung (14) sichert und in einer Öffnungsstellung eine Öffnung zum Herausführen der Gleitbügel (13) aus der jeweiligen Halterung (14) freigibt.

7. Erntegutaufnahmebehältnis (3) nach Anspruch 6, **dadurch gekennzeichnet, dass** die jeweilige Halterung (14) ein Betätigungsmittel (20), insbesondere eine Schraube oder Bolzen, zum Überführen des Verriegelungsmechanismus (18) von der Verschlussstellung in die Öffnungsstellung umfasst, wobei das Betätigungsmittel (20) von einer Oberseite des zweiten Erweiterungselements (8) betätigbar ist.

8. Erntegutaufnahmebehältnis (3) nach einem der Ansprüche 1 bis 8, **dadurch gekennzeichnet, dass** die Erntemaschine (1) einen Hebemechanismus (21) zum Überführen der Erweiterungselemente (7, 8) von der Transportstellung in die geöffnete Aufnahmestellung (11) und umgekehrt umfasst, wobei der Hebemechanismus (21) an dem ersten Erweiterungselement (7) angelenkt ist, wobei der Hebemechanismus (21) durch einen manuell bedienbaren Bedienhebel (22) betätigbar ist.

9. Erntegutaufnahmebehältnis (3) nach Anspruch 8, **dadurch gekennzeichnet, dass** an dem Bedienhebel (22) eine Welle (23) angeordnet ist, die eine Drehachse (24) des Bedienhebels (22) ausbildet, wobei der Drehachse (24) des Bedienhebels (22) Anschläge (28) zugeordnet sind, die Endlagen des Hebemechanismus (21) festlegen.

10. Erntegutaufnahmebehältnis (3) nach Anspruch 9, **dadurch gekennzeichnet, dass** auf der Welle (23) eine Halbkreisscheibe (25) mit Aussparungen (26) angeordnet ist, wobei der Hebemechanismus (21) einen Handhebel (27) umfasst, der mit den Aussparungen (26) eine Rastung zum Definieren der Anschläge (28) ausbildet.

11. Erntegutaufnahmebehältnis (3) nach einem der Ansprüche 8 bis 10, **dadurch gekennzeichnet, dass** der Hebemechanismus (21) eine Gasdruckfeder (32) zur Dämpfung einer Verschwenkbewegung des ersten Erweiterungselements (7) umfasst.

12. Erntegutaufnahmebehältnis (3) nach Anspruch 11, **dadurch gekennzeichnet, dass** die Gasdruckfeder (32) einendig an der Halbkreisscheibe (25) und anderendig an dem Sammelbehälter (12) angeordnet ist.

13. Erntegutaufnahmebehältnis (3) nach einem der Ansprüche 9 bis 12, **dadurch gekennzeichnet, dass** an der Welle (23) ein Hebel (29) angeordnet ist, der sich ausgehend von der Welle (23) in radialer Richtung erstreckt, wobei an dem freien Ende des Hebels (29) eine Koppelstange (30) angeordnet ist, wobei die Koppelstange (30) an ihrem freien Ende an dem ersten Erweiterungselement (7) angeordnet ist.

14. Erntegutaufnahmebehältnis (3) nach Anspruch 13, **dadurch gekennzeichnet, dass** sich der Hebel (29) und die Koppelstange (30) in den Endlagen des Hebemechanismus (21) in Längsrichtung parallel zueinander erstrecken.

## Claims

1. A harvested material receptacle (3) for a harvesting machine (1), comprising a collecting container (12) which is open at the top and has a substantially polygonal opening cross section (5) as well as a first and second extension element (7, 8) which are disposed opposite one another, wherein the extension elements (7, 8) are respectively pivotably disposed about a substantially horizontally extending pivot axis (10) at the edge of an opening (9) of the collecting container (12), wherein the extension elements (7, 8) can be transposed from a closed transport position into an open receiving position (11),
**characterized in that**
at least two slide arms (13) are fixed in position on the first extension element (7), wherein the slide arms (13) are respectively guided in a bracket (14) disposed on the second extension element (8).

2. The harvested material receptacle (3) according to claim 1, **characterized in that** the slide arms (13) are disposed on the first extension element (7) on an end face (16) positioned opposite the pivot axis (10) of the first extension element (7).

3. The harvested material receptacle (3) according to claim 1 or claim 2, **characterized in that** the slide arms (13) are disposed at a distance with respect to each other.

4. The harvested material receptacle (3) according to one of claims 1 to 3, **characterized in that** the slide arms (13) are constructed as bars which extend in the form of an arch, wherein preferably, the slide arms (13) are constructed from steel and the brackets (14) form slide bearings constructed from plastic.

5. The harvested material receptacle (3) according to one of claims 1 to 4, **characterized in that** at their respective free ends, the slide arms (13) comprise a dowel pin (17) which forms a stop with the respective bracket (14) in the open receiving position (11).

6. The harvested material receptacle (3) according to one of claims 1 to 6, **characterized in that** the respective bracket (14) comprises a locking mechanism (18) which secures the respective slide arm (13) in the respective bracket (14) in a closed position and exposes an opening for deploying the slide arm (13) from the respective bracket (14) in an open position.

7. The harvested material receptacle (3) according to claim 6, **characterized in that** the respective bracket (14) comprises an actuating means (20), in particular a screw or bolt, for transposing the locking mechanism (18) from the locking position into the open position, wherein the actuating means (20) can be actuated from a top side of the second extension element (8).

8. The harvested material receptacle (3) according to one of claims 1 to 8, **characterized in that** the harvesting machine (1) comprises a lifting mechanism (21) for transposing the extension elements (7, 8) from the transport position into the open receiving position (11) and vice versa, wherein the lifting mechanism (21) is articulated on the first extension element (7), wherein the lifting mechanism (21) can be actuated by an operating lever (22) which can be operated manually.

9. The harvested material receptacle (3) according to claim 8, **characterized in that** a shaft (23) is disposed on the operating lever (22) and forms an axis of rotation (24) for the operating lever (22), wherein stops (28) are associated with the axis of rotation (24) of the operating lever (22) and define end positions of the lifting mechanism (21).

10. The harvested material receptacle (3) according claim 9, **characterized in that** a semicircular plate (25) with recesses (26) is disposed on the shaft (23), wherein the lifting mechanism (21) comprises a hand operated lever (27) which forms a detent mechanism with the recesses (26) in order to define the stops (28).

11. The harvested material receptacle (3) according to one of claims 8 to 10, **characterized in that** the lifting mechanism (21) comprises a gas pressure spring (32) for damping a pivoting movement of the first extension element (7).

12. The harvested material receptacle (3) according to claim 11, **characterized in that** one end of the gas pressure spring (32) is disposed on the semicircular plate (25) and the other end is disposed on the collecting container (12).

13. The harvested material receptacle (3) according to one of claims 9 to 12, **characterized in that** a lever (29) is disposed on the shaft (23) and extends outwards from the shaft (23) in the radial direction, wherein a coupling rod (30) is disposed at the free end of the lever (29), wherein the free end of the coupling rod (30) is disposed on the first extension element (7).

14. The harvested material receptacle (3) according to claim 13, **characterized in that** in the end positions of the lifting mechanism (21), the lever (29) and the coupling rod (30) extend parallel with respect to one another in the longitudinal direction.

## Revendications

1. Récipient de récolte (3) destiné à une récolteuse (1), comprenant un réservoir collecteur (12), qui est ouvert vers le haut et présente une section d'ouverture (5) sensiblement polygonale, et comprenant un premier et un deuxième élément d'extension (7, 8) qui sont disposés en vis-à-vis l'un de l'autre, les éléments d'extension (7, 8) étant disposés chacun sur le bord d'une ouverture (9) du réservoir collecteur (12), avec possibilité de pivotement autour d'un axe de pivotement (10) sensiblement horizontal, les éléments d'extension (7, 8) pouvant être amenés d'une position de transport fermée dans une position de réception (11) ouverte,
**caractérisé en ce que**
au moins deux étriers de glissement (13) sont disposés de manière fixe sur le premier élément d'extension (7), les étriers de glissement (13) étant guidés respectivement dans un support (14) disposé sur le deuxième élément d'extension (8).

2. Récipient de récolte (3) selon la revendication 1, **caractérisé en ce que** les étriers de glissement (13) sont disposés sur une face frontale (16) du premier élément d'extension (7), qui est située en vis-à-vis de l'axe de pivotement (10) du premier élément d'extension (7).

3. Récipient de récolte (3) selon une des revendications 1 ou 2, **caractérisé en ce que** les étriers de glissement (13) sont disposés à distance l'un de l'autre.

4. Récipient de récolte (3) selon une des revendications 1 à 3, **caractérisé en ce que** les étriers de glissement (13) sont réalisés sous forme de tiges qui s'étendent en forme d'arcs, les étriers de glissement (13) étant de préférence réalisés en acier, et les supports (14) constituant des paliers lisses réalisés en matière plastique.

5. Récipient de récolte (3) selon une des revendications 1 à 4, **caractérisé en ce que** les étriers de glissement (13) comportent chacun à son extrémité libre une goupille de serrage (17) qui forme une butée avec le support (14) respectif, dans la position de réception (11) ouverte.

6. Récipient de récolte (3) selon une des revendications 1 à 6, **caractérisé en ce que** le support (14) respectif comprend un mécanisme de verrouillage (18) qui, dans une position de fermeture, bloque l'étrier de glissement (13) respectif dans le support (14) respectif, et, dans une position d'ouverture, dégage une ouverture pour faire sortir les étriers de glissement (13) du support (14) respectif.

7. Récipient de récolte (3) selon la revendication 6, **caractérisé en ce que** le support (14) respectif comprend un moyen d'actionnement (20), notamment une vis ou un boulon, pour amener le mécanisme de verrouillage (18) de la position de fermeture dans la position d'ouverture, le moyen d'actionnement (20) pouvant être manipulé depuis une face supérieure du deuxième élément d'extension (8).

8. Récipient de récolte (3) selon une des revendications 1 à 8, **caractérisé en ce que** la récolteuse (1) comprend un mécanisme de levage (21) pour amener les éléments d'extension (7, 8) de la position de transport dans la position de réception (11) ouverte et inversement, le mécanisme de levage (21) étant articulé sur le premier élément d'extension (7), le mécanisme de levage (21) pouvant être actionné par un levier de manœuvre (22) à commande manuelle.

9. Récipient de récolte (3) selon la revendication 8, **caractérisé en ce qu'**il est prévu sur le levier de manœuvre (22), un arbre (23) qui constitue un axe de rotation (24) du levier de manœuvre (22), des butées (28) étant associées à l'axe de rotation (24) du levier de manœuvre (22), qui définissent des positions extrêmes du mécanisme de levage (21).

10. Récipient de récolte (3) selon la revendication 9, **caractérisé en ce qu'**il est prévu sur l'arbre (23), un disque en demi-cercle (25) doté d'évidements (26), le mécanisme de levage (21) comprenant un levier à main (27) qui forme avec les évidements (26) un moyen d'encliquetage pour définir les butées (28).

11. Récipient de récolte (3) selon une des revendications 8 à 10, **caractérisé en ce que** le mécanisme de levage (21) comprend un vérin à gaz (32) destiné à l'amortissement d'un mouvement de pivotement du premier élément d'extension (7).

12. Récipient de récolte (3) selon la revendication 11, **caractérisé en ce que** le vérin à gaz (32) est disposé avec une extrémité sur le disque en demi-cercle (25) et avec l'autre extrémité sur le réservoir collecteur (12).

13. Récipient de récolte (3) selon une des revendications 9 à 12, **caractérisé en ce qu'**il est prévu sur l'arbre (23), un levier (29) qui s'étend dans la direction radiale en partant de l'arbre (23), sachant qu'une tige d'accouplement (30) est disposée sur l'extrémité libre du levier (29), la tige d'accouplement (30) étant disposée avec son extrémité libre sur le premier élément d'extension (7).

14. Récipient de récolte (3) selon la revendication 13, **caractérisé en ce que** le dans les positions extrêmes du mécanisme de levage (21), le levier (29) et la tige d'accouplement (30) s'étendent parallèlement l'un à l'autre.
